# EUROPÄISCHE PATENTSCHRIFT

(11) **EP 1 268 104 B1**
(45) Veröffentlichungstag und Bekanntmachung des Hinweises auf die Patenterteilung: **27.08.2003**
(21) Anmeldenummer: 01921182.0
(22) Anmeldetag: 09.03.2001
(51) Int. Cl.: B22D 27/15, B22D 15/02, B22D 27/04

(54) **VERFAHREN UND GIESSFORM ZUM STEIGENDEN GIESSEN IN SANDFORMEN MIT GERICHTETER ERSTARRUNG VON GUSSTEILEN**
METHOD AND MOULD FOR THE COUNTER GRAVITY CASTING IN SAND DIES WITH DIRECTIONAL SOLIDIFICATION
PROCEDE ET MOULE DE COULEE PAR CONTRE GRAVITE DANS DES MOULES EN SABLE A SOLIDIFICATION DIRIGEE DE PIECES COULEES

(30) Priorität: 27.03.2000 DE 10014591
(43) Veröffentlichungstag der Anmeldung: 02.01.2003
(73) Patentinhaber: ACTech GmbH Advanced Casting Technologies Giessereitechnologie, 09599 Freiberg (DE)
(72) Erfinder: VOIGT, Heiko, 04523 Pegau (DE); DEMARCZYK, Norbert, 01723 Grumbach (DE)
(74) Vertreter: Borchard, Wolfgang
(86) Internationale Anmeldenummer: DE0100941
(87) Internationale Veröffentlichungsnummer: WO01072452

(56) Entgegenhaltungen:
- DE-A- 3 305 839
- US-A- 4 969 505
- PATENT ABSTRACTS OF JAPAN vol. 007, no. 001 (M-183), 6. Januar 1983 (1983-01-06) & JP 57 160565 A (KOMATSU SEISAKUSHO KK), 2. Oktober 1982 (1982-10-02)

## Beschreibung

Die Erfindung betrifft ein Verfahren und eine Gießform zum steigenden Gießen in Sandformen mit harzreichen oder besonders bindemittelhaltigen Gießkernen und mit gerichteter Erstarrung von metallischen Gußteilen mit zumindest einem Hohlraum, insbesondere von Prototypen von Motorblöcken oder Zylinderköpfen z. B. für Verbrennungskraftmaschinen, die mit einem durch Kühlwasser durchströmten Hohlraum versehen sind.

Entsprechende Gußteile in Form von Motorblöcken oder Zylinderköpfen mit Kanälen für die Kühlflüssigkeit werden heute in großen Stückzahlen aus Leichtmetall oder Aluminium - bzw. Magnesiumlegierungen hergestellt. Derartige Gußteile werden nach dem Stand der Technik durch Eingießen von flüssigem Metall in Kokillen gefertigt, wodurch gute und maßhaltige Oberflächen erzielt werden. Ein generelles Problem für die gusstechnische Herstellung ergibt sich aus den erforderlichen Kühlwasserkanälen, welche praktisch nur durch Verwendung von Gußkemen darstellbar sind. Diese Gußkerne sind sogenannte verlorene Kerne, welche nach dem Erkalten des Blocks entfernt werden müssen. Üblicherweise werden sie aus Formmassen, z. B. aus Formsand unter Verwendung von Bindemitteln hergestellt. Ein anderes Verfahren zur Herstellung derartiger Blöcke besteht darin, Modelle aus Polystyrolschaum herzustellen. Beim Gießen des flüssigen Metalls schmilzt und verbrennt der Polystyrolschaum. In beiden Fällen müssen die entstehenden Gase durch Absaugung entfernt werden. Darüber hinaus können beim Gießen Gasbläschen entstehen, die im fertigen Gußstück zu Gasdefekten und Undichtigkeiten führen.
Nach der DE 36 18 059 A1 werden die in der Kokille entstehenden Gase beim steigenden Gießen während des Füllens über zwei Entlüftungsstutzen abgezogen, die an der höchsten Stelle der Gießform angeordnet sind. Hiebei müssen die Entlüftungsstutzen derart dicht ausgebildet werden, daß das flüssige Metall nicht durchtreten kann. Zum Dichtspeisen des Gußstückes muß der Gießdruck in der Regel bis zu einem bestimmten Grad der Erstarrung aufrechterhalten werden, so daß das Schrumpfen des Gusses in dem gegossenen Formteil im Bereich des Steigrohres erfolgt.

Dieses Verfahren kann auf die Herstellung von Prototypen mittels Sandformen nicht übertragen werden. Bei der Herstellung von Prototypen werden immer häufiger harzreiche lasergesinterte Gießkerne eingesetzt, die einen hohen Bindemittelgehalt aufweisen. Diese bewirken ebenfalls Gase beim Gießen, die an der Oberfläche der Gußteile Schaumstellen, Poren und Blasen bewirken können. Aufgrund der späteren Großserienfertigung in der Automobilindustrie müssen auch Prototypen mit hoher Leistung zur Verfügung gestellt werden, die insbesondere bei hochbelasteten Bauteilen einen hohen Qualitätsstandard gewährleisten. Aus diesem Grunde hat sich die Erfindung das Ziel gesetzt, ein Gießverfahren insbesondere für Prototypen zu entwickeln, welches Gußteile mit seriennahen Eigenschaften liefert.

Bekannt ist, daß Gießkerne an den Kernmarken mit Entlüftungsbohrungen versehen werden, um die beim Gießen entstehenden Gießgase aus dem Gießkem abzuführen. Nach der DE 24 26 717 A1 ist es bekannt, daß während des Gießens die im Formraum befindliche Luft abgesaugt und im Formraum ein Unterdruck erzeugt wird. Die im Formraum befindliche Luft kann somit mit den entstehenden Gasen keinen Gegendruck bewirken, so daß der eigentliche Gießdruck zumindest in Bereich der äußeren Wandung des späteren Gußstücks herabgesetzt wird. Dadurch können Gasdefekte vermieden werden, weil die Luft schnell und rechtzeitig entweichen kann. Die Erhöhung des Gießdrucks beruht auf einer entsprechenden Vergrößerung des über der Eingußöffnung beziehungsweise dem Gusskopf wirksamen spezifischen Drucks der Umgebungsatmosphäre. Zur Herstellung eines Gußstücks wird eine Form verwendet, bei der die perforierte Formraumwandung über eine Leitung mit einem Unterdruckerzeuger in Verbindung steht. Dadurch kann die Einfüllgeschwindigkeit des geschmolzenen Metalls erhöht werden. Die gleichen Verhältnisse sind somit bei den in der DE 22 58 461 A1 und DE 32 40 808 beschriebenen Verfahren gegeben, bei denen die Gießformen mit luftdurchlässigen Wänden versehen und an eine Unterdruckquelle angeschlossen sind.
In der DE 33 05 839 A1 ist ein Verfahren und eine Vorrichtung zum Herstellen eines Gußstückes in einer aus Formstoff bestehenden Form offenbart, die rundum durch eine Schrumpffolie mit Vakuumanschluß gegenüber dem Atmosphärendruck abgedichtet und mindestens während des Gießvorgangs an eine Unterdruckquelle angeschlossen ist. Hierbei werden für eine bessere Entgasung der Kerne in der Form an die Kernmarken Kernluftführungen gelegt und an das Vakuum angekoppelt. Wenn die gesamt Form an das Vakuum angeschlossen ist, ergibt sich eine schnellere Formfüllung.

Durch die Erhöhung der Einfüllgeschwindigkeit können jedoch Verwirbelungen in der Metallschmelze eintreten, durch die Teile von der Sandform und von Schlacke gelöst und eingeschlossen werden. Um dies so weit als möglich zu verhindern, hat sich für den Formenguß das steigende Gießen bewährt, da hierbei die Metallschmelze nicht verwirbelt, sondern die Form mit einer beruhigten Schmelzfront gefüllt wird. Dadurch können insbesondere Oxideinschlüsse im Guß weitgehend vermieden werden.

Die Aufgabe der Erfindung besteht somit in einem Verfahren zum steigenden Gießen, bei dem beim Entlüften der Gießform eine turbulenzarme Strömung der flüssigen Metallschmelze gewährleistet wird. Die Behinderung der Formfüllung durch Luftpolster in der Form soll ebenfalls abgebaut werden. Gleichzeitig sollen mit dem Verfahren dichte und porenfreie, mechanisch feste Gußstücke hergestellt werden.

Erfindungsgemäß wird die Aufgabe durch ein Verfahren zum steigenden Gießen in Sandformen gelöst, bei dem der durch die harzreichen oder bindemittelhaltigen Gießkerne gebildete Hohlraum nach dem Einfüllen der Metallschmelze mit einem Unterdruck belastet wird, der den Druck der Kerngase gegenüber der Metallschmelze abbaut, wobei der Eintritt von Kerngas in die Metallschmelze verhindert wird.
Nach einer bevorzugten Ausgestaltung der Erfindung wird der Unterdruck in dem Hohlraum durch eine an mindestens eine Kernmarke angeschlossene Vakuumeinrichtung erzeugt. Während beim bekannten Schwerkraftguss die Metallschmelze unter dem Einfluss der Schwerkraft in die Gießform fließt und unter normalem Luftdruck erstarrt, erstarrt bei dem vorgeschlagenen Verfahren die Metallschmelze unter Unterdruck, der in dem Kern erzeugt wird.

Nach einer weiteren Ausgestaltung der Erfindung wird das Entlüften der Gießform über die an Kernmarken angeschlossene Vakuumeinrichtung vorgenommen. Durch das Entlüften der Gießform über die Kernmarken ist der Vorteil zu verzeichnen, daß während des Gießens kein Unterdruck in der Gießform aufgebaut werden kann, der die Füllgeschwindigkeit der Metallschmelze erhöht. Dies ist darauf zurückzuführen, daß der Unterdruck in dem Hohlraum erst dann aufgebaut werden kann, wenn der Gießkem vollständig mit der flüssigen Metallschmelze umhüllt und von dieser luftdicht eingeschlossen ist. Somit kann das Entlüften der Gießform während des Gießens vorgenommen werden.

Nach einer Weiterbildung der Erfindung kann die Dichtspeisung verbessert werden, wenn die Gießform während des Entlüftens gekühlt wird. Durch die Kühlung erfolgt eine gerichtete Erstarrung der Metallschmelze, was im nachfolgenden anhand eines Ausführungsbeispiels und anhand von Zeichnung näher erläutert werden soll.

In den zu dem Ausführungsbeispiel gehörenden Zeichnungen zeigt
Figur 1 einen Schnitt durch eine Gießform mit einem Basiskern,
Figur 2 den Basiskern nach Figur 1 mit einem Wassermantelkern und
Figur 3 eine perspektivische Darstellung eines Basiskerns in schematischer Darstellung.

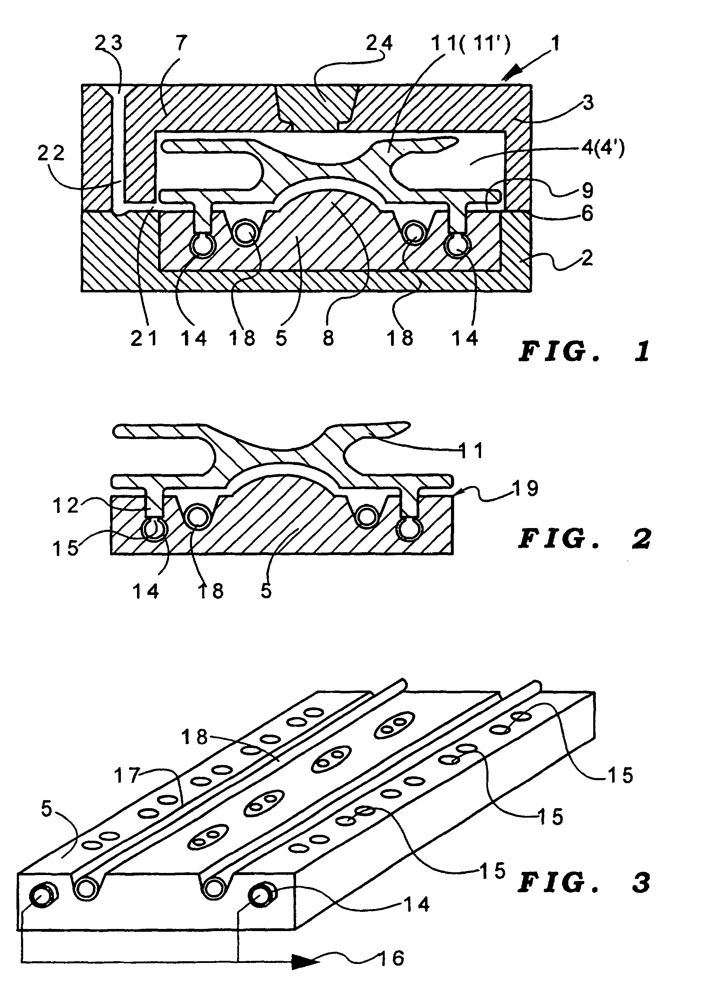

Die Gießform 1 nach Figur 1 zur Durchführung des erfindungsgemäßen Verfahrens weist eine horizontale Teilung 6 zwischen einer Unterkastenform 2 und einer Oberkastenform 3 aus Formstoff 7 auf, mit dem ein Formhohlraum 4 für ein Gußteil insbesondere für einen Zylinderkopf 4' gebildet wird, der mit der zu gießenden flüssigen Metallschmelze zu füllen ist. Als Formstoff 7 wird im Ausführungsbeispiel vorzugsweise ein Formsand mit einem harzhaltigen Bindemittel eingesetzt. Auf die Darstellung der Gießform 1 mittels Formsand soll die Erfindung jedoch nicht beschränkt werden. Die Unterkastenform 2 besitzt einen Basiskern 5 z.B. mit einem gewölbten Teilabschnitt 8, welcher die Ausbildung des brennraumseitigen Zylinderkopfes 4' übernimmt. Vorzugsweise kann für den Basiskern 5 ein Formstoff 7 eingesetzt werden, der durch Formstoff- Fräsen bearbeitbar ist. Die Teilung 6 zwischen den beiden Formhälften verläuft horizontal, und zwar in der Ebene der Dichtungsfläche 9 des künftigen Zylinderkopfes 4'. Die Unterkastenform 2 inklusive Basiskern 5 kann auch einteilig durch konventionelle Formverfahren hergestellt werden.

Der Formhohlraum 4 für den Zylinderkopf 4' weist weiter einen Kern mit entsprechenden Kernmarken 12 auf, der nachfolgend im Ausführungsbeispiel als Wassermantelkern 11 bezeichnet wird. Die Kernmarken 12 sind in dem Basiskern 5 verankert. Der einen Hohlraum 11' bildende Wassermantelkern 11 ist einstückig oder aus mehreren Kernpaketen bestehend zu einem Wassermantelkern 11 zusammengefaßt. Die Herstellung des Wassermantelkerns 11 erfolgt bei der Herstellung von Prototypen mit einem harzreichen Formstoff durch ein selektives Lasersintern. Gewöhnlich weisen durch Lasersintern hergestellte Wassermantelkerne 11 einen mehrfach höheren Bindemittelanteil auf, wodurch beim Gießen eine erhöhte Entwicklung von Gießgasen zu verzeichnen ist.

In den Basiskern 5 eingebettet befinden sich unterhalb der Kernmarken 12 Entlüftungsrohre 14, die im Bereich der Kernmarken 12 nach Figur 2 mit einer Entlüftungsbohrung 15 versehen werden, so daß die Kemmarken 12 stirnseitig mit den Entlüftungsbohrungen 15 verbunden sind. Ein System von Entlüftungsbohrungen kann sich im Kern fortsetzten bzw. in diesen selbst hineinverlegt werden. Alternativ können die Kerne auch in der Oberkastenform 3 oder in weiteren Formelementen verankert werden.

Aus Figur 3 ist ersichtlich, daß die Entlüftungsrohre 14 mit mehreren Entlüftungsbohrungen 15 versehen werden können, so daß jede Kernmarke 12 entlüftet ist. Außerhalb der Gießform 1 sind die Entlüftungsrohre 14 mit einer nicht weiter dargestellten Vakuumeinrichtung 16 verbunden.
Wie aus Figur 3 weiter ersichtlich, sind in dem plattenförmigen Basiskern 5 Kühlrinnen 17 ausgebildet, die der Aufnahme eines Kühlsystems z.. B. in Form von Kühlrohren 18 dienen. Die Kühlrinnen 17 sind gießraumseitig offen, so daß die Kühlrohre 18 mit der einlaufenden Metallschmelze direkt am Zylinderkopf 4' angegossen sind. Das Kühlsystem mit Kühlrohren 18 kann vor dem Gießen mit einer Schlichte versehen werden, damit eine Verbindung mit dem Gießmetall vermieden wird. Das anhaftende Kühlsystem kann unter Umständen nach der Erstarrung schon von Hand entfernt werden. Zwischen dem Kühlsystem 18 und der späteren Dichtungsfläche 9 des Zylinderkopfes 4' befindet sich eine Bearbeitungszugabe 19, so daß das Kühlsystem 18 bzw. dessen Abdruck nach dem Gießen durch spanende Bearbeitung leicht zu entfernen ist.

Die Gießform 1 nach Figur 1 wird in dem Ausführungsbeispiel von der Seite her über einen waagerechten Anschnitt 21 gefüllt, der über ein Gießsystem 22 mit einem Eingußtrichter 23 versehen ist. Der Eingußtrichter 23 befindet sich in gleicher Höhe wie ein oberhalb der Gießform 1 angeordneter Speiser 24, der zum Dichtspeisen vorgesehen ist. Dadurch wird die Gießform 1 wie bei einer Kokille mit Steigrohr an der tiefsten Stelle gefüllt. Es entsteht eine ungünstige Temperaturverteilung, da der Eingußtrichter 23 mit der zuletzt eingespeisten Metallschmelze nicht den Speiser 24 bildet. Durch den Einsatz des Kühlsystems an der Unterseite des Zylinderkopfes 4' wird die Temperaturverteilung umgekehrt. Dadurch wird das Prinzip der gerichteten Erstarrung realisiert, da die Temperatur zum Speiser 24 hin zunimmt. Dies kann durch eine Unterbrechung der Formfüllung beim Erreichen des unteren Niveaus des Speiser 24 und ein Gießen des restlichen heißen Metalls direkt in den Speiser 24 unterstützt werden.

Die Erfindung geht davon aus, das durch eine gerichtete Erstarrung ein besonders beanspruchbares Gefüge ausgebildet wird, daß bei einem Zylinderkopf 4' brennraumseitig mit dem darüberliegenden Wassermantel angeordnet ist. Dieser Bereich ist durch das anstehende Temperaturgefälle im Betrieb am höchsten beansprucht. In diesem Bereich befindet sich beim Gießen das zuletzt gegossene Metall, das an dieser Stelle am heißesten ist. Demzufolge wird durch die gezielte Kühlung die Ausbildung von Lunkern verhindert. Die Lunker resultieren aus der Schwindung, die beim Gießen des geschmolzenen Metalls und beim anschließenden Erstarren des Metalls herrühren. Die Erfindung geht weiter von der Überlegung aus, die beim Gießen entstehenden Gase an den Kernmarken 12 abzusaugen und nach dem Gießen in dem Hohlraum 11' einen Unterdruck zu erzeugen. Hierbei stellt sich der Unterdruck selbsttätig ein, wenn die Gießform 1 vollständig mit Metallschmelze gefüllt ist.

Solange die Gießform 1 nicht vollständig gefüllt beziehungsweise der Hohlraum 11' nicht von der Metallschmelze eingeschlossen ist, kann nur eine unwesentliche Druckerhöhung eintreten ohne die Füllgeschwindigkeit der Gießform 1 zu erhöhen. Beim steigenden Gießen wird die Gießform 1 daher mit einer beruhigten Schmelzfront gefüllt. Nach Beendigung des Füllvorgangs erhöht sich der Widerstand an den Entlüftungsrohren 14. Nach dem Einfüllen der Metallschmelze in den Hohlraum 11' wird mittels unterhalb der Kernmarken 12 angeordneten Entlüftungsrohren 14 ein Unterdruck aufgebaut, der größer als der metallostatische Druck in der Metallschmelze ist. Der Hohlraum 11' wird mit einem Unterdruck belastet, der größer als der in dem Kern entstehende Druck der Kemgase ist.

Auf diese Weise wird durch den Unterdruck in Verbindung mit der gerichteten Erstarrung durch Kühlung eine Dichtspeisung des brennraumseitigen Bereichs des Zylinderkopfes 4' gewährleistet. Der rasch erstarrende Bereich wird durch die restliche Metallschmelze aus dem Speiser 24 nachgespeist. Es können auf diese wirtschaftliche Art und Weise mittels Sandguß Prototypen in seriennaher Qualität hergestellt werden. Die Erfindung wirkt sich dahingehend aus, daß Gußstücke in hervorragender Gießqualität entstehen. Es werden weitgehend porenfreie und mechanisch sehr feste Gußstücke erreicht. Neben einem besonders hochwertigen Gußgefüge wird die Ausbildung eines Lunkers wirkungsvoll vermieden.

## Patentansprüche

1. Verfahren zum steigenden Gießen in Sandformen mit harzreichen oder besonders bindemittelhaltigen Gießkernen und mit gerichteter Erstarrung von Gußteilen, insbesondere von Prototypen von Motorblöcken oder Zylinderköpfen z. B. für Verbrennungskraftmaschinen, die mit einem durch Kühlwasser durchströmten Hohlraum ausgebildet sind, wobei die mit mindestens einem Speiser versehene Gießform über ein Gießsystem an einen Eingußtrichter angeschlossen und die darin enthaltene Metallschmelze unter Schwerkraft durch das Gießsystem in die Gießform verdrängt wird, **dadurch gekennzeichnet, daß** nach dem Einfüllen der Hohlraum (11') in der Metallschmelze mittels unterhalb der Kernmarken (12) angeordneten Entlüftungsrohren (14) mit einem Unterdruck belastet wird, der größer als der in dem Kern entstehende Druck der Kerngase ist.

2. Verfahren nach Anspruch 1, **dadurch gekennzeichnet, daß** der Unterdruck in dem Hohlraum (11') durch eine Vakuumeinrichung (16) erzeugt wird, die über Entlüftungsrohre (14) mit Entlüftungsbohrungen (15) an mindestens einer Kernmarke (12) bzw. mit einem in den Kern hineinreichenden Entlüftungssystem angeschlossenen wird.

3. Verfahren nach Anspruch 1 bis 2, **dadurch gekennzeichnet, daß** das Entlüften der Gießform (1) über die an Kernmarken (12) angeschlossene Vakuumeinrichtung (16) vorgenommen wird.

4. Verfahren nach Anspruch 1 bis 3, **dadurch gekennzeichnet, daß** das Entlüften der Gießform (1) während des Gießens vorgenommen wird.

5. Verfahren nach Anspruch 1 bis 3, **dadurch gekennzeichnet, daß** die Gießform (1) nach bzw. während des Füllens der Gießform (1) gekühlt wird.

6. Gießform zur Durchführung des Verfahrens nach Anspruch 1 bis 5 mit mindestens einer Unterkastenform mit einem Kühlsystem und einer Oberkastenform aus Formstoff, **dadurch gekennzeichnet, daß** der Formhohlraum (4) zumindest einen mit Metallschmelze zu umgiessenden Kern, z.B. Wassermantelkern (11) aufweist, der zur Ausbildung eines Hohlraums (11') vorgesehen und über Kernmarken (12) mit eingebetteten an eine Vakuumeinrichtung (16) angeschlossenen Entlüftungsrohren (14) verbunden ist.

7. Gießform nach Anspruch 6, **dadurch gekennzeichnet, daß** die Entlüftungsrohre (14) und das Kühlsystem mit den Kühlrohren (18) in einen Basiskern (5) bzw. Formteil eingebettet sind.

8. Gießform nach Anspruch 6 bis 7, **dadurch gekennzeichnet, daß** in einem plattenförmigen Basiskern (5) bzw. Formteil gießraumseitig offene Kühlrinnen (17) mit einem Kühlsystem mit Kühlrohren (18) ausgebildet sind, die mit Metallschmelze unter Ausbildung einer Bearbeitungszugabe (19) direkt mit dem Gußteil, z. B. Zylinderkopf (4') in Kontakt sind.

9. Gießform nach Anspruch 6 bis 8, **dadurch gekennzeichnet, daß** ein mit Metallschmelze umschlossener Kern, z.B. Wassermantelkern (11) einstückig ist oder aus mehreren Kernpaketen besteht.

## Claims

1. Method for counter-gravity casting in sand dies with casting cores or especially containing bonding agents, and with directional solidification of castings, in particular of prototypes of engine blocks or cylinder heads, such as for internal combustion machines, which are designed with a cavity through which cooling water flows, whereby the casting, provided with at least one feeder, is connected by means of a casting system to a pouring basin, and the metal melts contained therein are driven by the force of gravity through the casting system into the mould, **characterised in that**, after the filling of the cavity (11'), an underpressure is imposed in the metal melt by means of air venting pipes (14) arranged beneath the core prints (12), said underpressure being greater than the pressure of the core gases pertaining in the core.

2. Method according to Claim 1, **characterised in that** the underpressure in the cavity (11') is created by a vacuum device (16), which is connected via air venting pipes (14) with venting holes (15) to at least one core print (12) or to an air venting system extending into the core.

3. Method according to Claims 1 to 2, **characterised in that** the venting of the casting mould (1) is carried out by means of the vacuum device (16) connected to the core prints (12).

4. Method according to Claims 1 to 3, **characterised in that** the venting of the casting mould (1) is carried out during casting.

5. Method according to Claims 1 to 3, **characterised in that** the casting mould (1) is cooled after or during the filling of the casting mould (1) respectively.

6. Casting mould for the performance of the method according to Claims 1 to 5, with at least one drag mould with a cooling system and a cope mould made of moulding material, **characterised in that** the mould cavity (4) exhibits at least one core which is to be cast around by metal melts, such as a water jacket mould (11), which is provided for the formation of a cavity (11') and is connected by means of core prints (12) to air venting tubes (14) which are connected embedded to a vacuum device (16).

7. Casting mould according to Claim 6, **characterised in that** the air venting pipes (14) and the cooling system with the cooling tubes (18) are embedded in a base core (5) or moulded part respectively.

8. Casting mould according to Claims 6 to 7, **characterised in that** cooling troughs (17), with a cooling system with cooling pipes (18) open on the casting chamber side are formed in a plate-shaped basic core (5) or moulded part respectively, which are in direct contact with the cast part, e.g. cylinder head (4'), with metal melts with the formation of a processing additive (19).

9. Casting mould according to Claims 6 to 8, **characterised in that** a core surrounded with a metal melt, such as a water jacket core (11), is a single piece or consists of several core packets.

## Revendications

1. Procédé par contre gravité dans des moules de sable à noyaux de coulée résineux ou en particulier contenant un liant et à solidification dirigée de pièces coulées, en particulier de prototype de blocs moteurs ou de culasses de cylindre p.ex. pour machines à combustion interne comportant une cavité parcourue par de l'eau de refroidissement, le moule pourvu d'au moins d'une masselotte étant relié par un système de coulée à un entonnoir de coulée et la matière métallique en fusion s'y trouvant étant déplacée sous l'effet de la force de gravité par le système de coulée, **caractérisé en ce que**, après le remplissage, la cavité (11') dans la matière métallique en fusion à l'aide de tubes de ventilation (14) placée sous les portées de noyau (12), est sollicitée par une dépression supérieure à la pression des gaz produits dans le noyau.

2. Procédé selon la revendication 1 **caractérisé en ce que** la dépression dans la cavité (11') est produite par un dispositif de vide (16) raccordé à au moins une portée de noyau (12) voire à un système de ventilation aboutissant dans le noyau par le biais du tube de ventilation (14) avec trous de ventilation (15).

3. Procédé selon les revendications 1 à 2 **caractérisé en ce que** la ventilation du moule (1) s'effectue par l'intermédiaire du dispositif de vide (16) raccordé aux portées de noyau (12).

4. Procédé selon les revendications 1 à 3 **caractérisé en ce que** la ventilation du moule (1) s'effectue pendant la coulée.

5. Procédé selon les revendications 1 à 3 **caractérisé en ce que** le moule (1) est refroidi après voire pendant le remplissage du moule (1).

6. Moule pour exécuter le procédé selon les revendications 1 à 5 avec au moins un moule à châssis de dessous à système de refroidissement et un moule à contre-châssis en matériau du moule **caractérisé en ce que** l'empreinte (4) présente au moins un noyau à refondre avec matière métallique en fusion, p.ex. des noyaux pour chambre d'eau (11) prévu à la formation d'une cavité (11') et relié à des tubes de ventilation (14) enrobés raccordés à un dispositif de vide (16) par des portées de noyau (12).

7. Moule selon la revendication 6 **caractérisé en ce que** les tubes de ventilation (14) et le système de refroidissement sont enrobés avec les tubes de refroidissement (18) dans un noyau de base (5) voire une pièce moulée.

8. Moule selon les revendications 6 à 7 **caractérisé en ce que** dans un noyau de base (5) en forme de plaque voire pièce moulée, des canaux de refroidissement (17) ouverts côté espace de coulée comprennent un système de refroidissement à tubes de refroidissement (18) étant en contact direct avec la pièce coulée p.ex. une culasse cylindrique (4') avec la matière métallique en fusion en formant une surépaisseur d'usinage (19).

9. Moule selon les revendications 6 à 8 **caractérisé en ce que** un noyau enrobé de matière métallique en fusion, p.ex. noyau pour chambre d'eau (11) se compose d'une seule pièce ou de plusieurs ensembles de noyaux.
